# EUROPEAN PATENT APPLICATION

(11) **EP 4 741 358 A1**
(43) Date of publication of application: **13.05.2026**
(21) Application number: 24804716.9
(22) Date of filing: 14.06.2024
(51) Int. Cl.: C03C 3/089, C03C 3/091, C03C 3/093, C23C 4/11

(54) **METAL-GLASS COMPOSITE**

(30) Priority: 04.07.2023 JP 2023110338
(71) Applicant: Nakashima Sangyo Co., Ltd., Seto-shi, Aichi 489-0037 (JP)
(72) Inventor: NAKASHIMA, Mikio, Seto-shi, Aichi 4890037 (JP)
(74) Representative: AWA Sweden AB
(86) International application number: PCT/JP2024/021605
(87) International publication number: WO 2025/009358

(57) **Abstract**

A metallic glass composite is provided by preparing a thermally-spraying glass powder having a thermal expansion coefficient corresponding to a metallic base, which is a thermally spraying target, and suppressing air bubbles trapped in a glassy substance to enhance strength such as impact resistance. The metallic glass composite includes a metallic base made of a body-centered cubic ferrous material, and a thermally-sprayed glass portion formed at a film thickness of 10 to 2,000 µm on the metallic base. A glass material forming the thermally-sprayed glass portion includes: a first ingredient group A consisting of SiO₂ of 35 to 70 mass%; a second ingredient group B consisting of B₂O₃ of 9 to 15 mass%, Li₂O of 5 to 9 mass% and Na₂O of 4 to 10 mass%, which is 18 to 30 mass% in total; and a third ingredient group C consisting of BaO of 0 to 15 mass%, TiO₂ of 2 to 15 mass%, Al₂O₃ of 0 to 8 mass%, and ZnO of 0 to 15 mass%, which is 10 to 30 mass% in total. A proportion of a main ingredient D including these ingredient groups A, B and C is 90 mass% or more.

## Description

### BACKGROUND OF THE INVENTION

### 1. Field of the Invention

The present disclosure relates to a metallic glass composite, and more particularly, to a metallic glass composite obtained by thermally spraying a granulated glassy substance on a surface of a metal so that the granulated glassy substance is firmly adhered to the surface.

### 2. Description of Related Art

When forming a glassy film on a metallic base, thermal spraying is used. By using the thermal spraying rather than enameling, a glass substance may be more firmly deposited on the metallic base to form a film. Therefore, the thermal spraying may be suitably used for a product which requires durability.

In a thermal spraying apparatus, a thermally-spraying material such as glass, ceramics, for example, and a carrier gas are mixed with each other. Plasma is generated by a separately-supplied gas and a high current to cause high heat, so that a thermally-spraying glass powder made of the granulated glassy substance is melted. Thereafter, the thermally-spraying glass powder thus melted is discharged from the thermal spraying apparatus toward a metallic base to be thermally sprayed (see Patent Documents 1 and 2, for example).

The metallic base and the glassy substance of the thermally-spraying glass powder are different in thermal expansion coefficient (linear expansion coefficient) from each other. In terms of specific heat, the metallic base is rapidly cooled. The metallic base and the thermally-spraying glass powder are different from each other in terms of a volume shrinkage rate. Thus, the thermal expansion coefficient needs to be controlled. This makes it extremely difficult to apply the thermal spraying with respect to such different materials.

The present inventors developed a thermally-spraying glass powder and a thermal spraying method disclosed in Patent Document 1, and a thermal spraying apparatus disclosed in Patent Document 2. The present inventors established thermal spraying to be firmly applied to different materials such as a metallic base and a glassy substance of the thermally-spraying glass powder and fabricated a metallic glass composite. As disclosed in Patent Document 1, a surface of the metallic base to be thermally sprayed is heated while being roughened by sandblasting, for example. Thereafter, the glassy substance derived from the thermally-spraying glass powder melted by the thermal spraying is applied to the surface, thereby forming a film thereon. It is considered that the glassy substance derived from the thermally-spraying glass powder permeates into the roughened surface of the metallic base to improve adhesion between the metallic base and the glassy substance.

### Document in Related Art

### Patent Document

Patent Document 1: Japanese Laid-Open Patent Publication No. 2013-216977
Patent Document 2: Japanese Laid-Open Patent Publication No. 2021-130841

### SUMMARY OF THE INVENTION

Further, the present inventors have repeatedly conducted intensive studies on the formation of the glassy substance on the surface of the metallic base by the thermal spraying. As a result, the present inventors have found that the thermal expansion coefficient of the thermally-spraying glass powder needs to be adjusted in consideration of differences between thermal expansion coefficients of various types of metallic bases. Further, the present inventors have found that air bubbles, which are inevitably generated when the thermally-spraying glass powder is melted by the thermal spraying and deposited on the metallic base, degrade impact resistance of the glassy substance of a finished metallic glass composite.

The present disclosure was made to solve the above-mentioned matters, and the present disclosure provides a metallic glass composite obtained by integrating different materials such as a metallic base and a glassy substance of a thermally-spraying glass powder by thermal spraying, in which the thermally-spraying glass powder is fabricated to have a thermal expansion coefficient corresponding to the metallic base to be thermally sprayed, and the glassy substance formed on the metallic base after the thermal spraying are suppressed from including air bubbles to increase strength such as impact resistance.

That is, a metallic glass composite according to an example embodiment includes: a metallic base made of a body-centered cubic ferrous material; and a thermally-sprayed glass portion formed at a film thickness of 10 to 2,000 micrometer (µm) on the metallic base, wherein a glass material forming the thermally-sprayed glass portion includes: a first ingredient group A consisting of SiO₂ of 35 to 70 mass%; a second ingredient group B consisting of B₂O₃ of 9 to 15 mass%, Li₂O of 5 to 9 mass% and Na₂O of 4 to 10 mass%, which is 18 to 30 mass% in total; and a third ingredient group C consisting of BaO of 0 to 15 mass%, TiO₂ of 2 to 15 mass%, Al₂O₃ of 0 to 8 mass%, and ZnO of 0 to 15 mass%, which is 10 to 30 mass% in total. A proportion of a main ingredient D including the first ingredient group A, the second ingredient group B, and the third ingredient group C is 90 mass% or more, a value of a linear expansion coefficient of the glass material in a range of room temperature to 300 degrees C is 9 to 11 (×10⁻⁶/degrees C), and an area ratio of air bubbles having a diameter of 1 µm or more in a cross section of the thermally-sprayed glass portion in a thickness direction is less than 40%.

Further, a metallic glass composite according to another example embodiment includes: a metallic base made of a body-centered cubic ferrous material; and a thermally-sprayed glass portion formed at a film thickness of 10 to 2,000 µm on the metallic base, wherein a glass material forming the thermally-sprayed glass portion includes: a first ingredient group A consisting of SiO₂ of 50 to 60 mass%; a second ingredient group B consisting of B₂O₃ of 2 to 8 mass%, Li₂O of 8 to 15 mass% and Na₂O of 8 to 20 mass%, which is 25 to 35 mass% in total; and a third ingredient group C consisting of BaO of 3 to 12 mass%, TiO₂ of 4 to 15 mass%, Al₂O₃ of 0 to 5 mass%, and ZnO of 0 to 5 mass%, which is 10 to 20 mass% in total. A proportion of a main ingredient D including the first ingredient group A, the second ingredient group B, and the third ingredient group C is 90 mass% or more, a value of a linear expansion coefficient of the glass material in a range of room temperature to 300 degrees C is 14 to 17(×10⁻⁶/degrees C), and an area ratio of air bubbles having a diameter of 1m or more in a cross section of the thermally-sprayed glass portion in a thickness direction is less than 40%.

In an aspect, a difference between the linear expansion coefficient of the glass material and a linear expansion coefficient of the metallic base may be 15% or less.

In an aspect, the metallic glass composite may further include a molten solidified portion formed in an interface between the metallic base and the thermally-sprayed glass portion in the cross-section, the molten solidified portion being formed when the thermally-sprayed glass portion is embedded in the metallic base. The molten solidified portion may have a thickness of 0.3 µm or more.

In an aspect, in the thermally-sprayed glass portion, the area ratio of the air bubbles having the diameter of 1 µm or more, which exist in a region of 30% or less of the thermally-sprayed glass portion in the thickness direction starting from the interface between the metallic base and the thermally-sprayed glass portion in the cross-section may be 50% or less.

In an aspect, the film thickness of the thermally-sprayed glass portion may be in a range of 10 to 100 µm, and the area ratio of the air bubbles having the diameter of 1 µm or more in the cross section of the thermally-sprayed glass portion in the thickness direction may be less than 10%.

In an aspect, the glass material may include an auxiliary ingredient E in addition to the main ingredient D. The auxiliary ingredient E may include one or two or more ingredients selected from a group consisting of CaO, SrO, MgO, P₂O₅, K₂O, V₂O₅, Cr₂O₃, MnO₂, Fe₂O₃, Co₃O₄, NiO₂, CuO, Y₂O₃, ZrO₂, NB₂O₂, MoO₃, SnO₂, Sb₂O₃, WO₃, PbO, Bi₂O₃, La₂O₃, CeO₂, Pr₆O₁₁, Nd₂O₃, Sm₂O₃ and Gd₂O₃.

The metallic glass composite of the present disclosure is obtained by integrating different materials such as a metallic base and a glassy substance of a thermally-spraying glass powder by thermal spraying. The thermally-spraying glass powder is fabricated to have a thermal expansion coefficient corresponding to the metallic base to be thermally sprayed, and the glassy substance formed on the metallic base after the thermal spraying are suppressed from including air bubbles. Thus, it is possible to increase strength such as impact resistance.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a schematic cross-sectional view of a plate material used for a metallic glass composite, FIG. 1B is a schematic cross-sectional view of a perforated plate material used for the metallic glass composite, FIG. 1C is a schematic cross-sectional view of a tubular material used for the metallic glass composite, and FIG. 1D is a schematic cross-sectional view of a bolt material used for the metallic glass composite.
FIG. 2A is a schematic view illustrating a composition relationship of a glass material, and FIG. 2B is a schematic cross-sectional view illustrating a structure of the metallic glass composite.
FIG. 3A is a cross-sectional photograph obtained by magnifying 100 times the cross section of the metallic glass composite of Prototype example GI, and FIG. 3B is a cross-sectional photograph obtained by magnifying 1,000 times the same.
FIG. 4A is a cross-sectional photograph obtained by magnifying 100 times the cross section of the metallic glass composite of Prototype example G2, and FIG. 4B is a cross-sectional photograph obtained by magnifying 1,000 times the same.
FIG. 5A is a cross-sectional photograph obtained by magnifying 100 times the cross section of the metallic glass composite of Prototype example G6, and FIG. 5B is a cross-sectional photograph obtained by magnifying 1,000 times the same.
FIG. 6A is a cross-sectional photograph obtained by magnifying 100 times the cross section of the metallic glass composite of Prototype example G11, and FIG. 6B is a cross-sectional photograph obtained by magnifying 1,000 times the same.
FIG. 7A is a cross-sectional photograph obtained by magnifying 100 times the cross section of the metallic glass composite of Prototype example G13, and FIG. 7B is a cross-sectional photograph obtained by magnifying 1,000 times the same.
FIG. 8A is a cross-sectional photograph obtained by magnifying 100 times the cross section of the metallic glass composite of Prototype example G19, and FIG. 8B is a cross-sectional photograph obtained by magnifying 1,000 times the same.
FIG. 9A is a cross-sectional photograph obtained by magnifying 100 times the cross section of the metallic glass composite of Prototype example H5, and FIG. 9B is a cross-sectional photograph obtained by magnifying 1,000 times the same.
FIG. 10 is a graph illustrating a relationship between a total air-bubble area ratio and a falling-ball height.
FIG. 11 is a graph illustrating a relationship between an air-bubble area ratio in an interface and a dielectric strength voltage.

### DETAILED DESCRIPTION OF EMBODIMENTS

A metallic glass composite according to an example embodiment is a composite composed of a metal and a glass in which a film of a glassy substance is formed on a portion or the entirety of a surface of each of various types of metals by thermal spraying. The glassy substance is prepared in a powder shape such as frits and is supplied to a thermal spraying apparatus. Further, the powder of the glassy substance is instantaneously melted through plasma thermal spraying by the thermal spraying apparatus and is injected toward a metallic base to be thermally sprayed. As a result, the molten glassy substance is deposited on the metallic base and is cooled down, so that the glassy substance adheres to the metallic base to be integrated together.

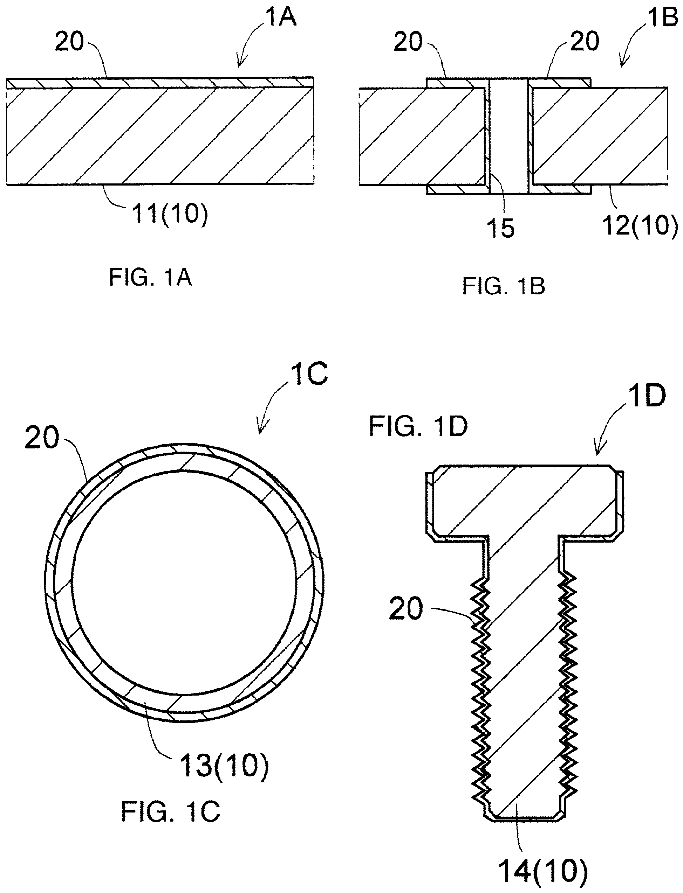

FIGS. 1A to 1D are schematic views of metallic glass composites 1A, 1B, 1C, and 1D in which a thermally-sprayed glass portion 20 is formed on (a surface of) a metallic base 10, respectively.

FIG. 1A illustrates the metallic glass composite 1A in which the thermally-sprayed glass portion 20 is formed on a surface of a plate-shaped metallic base 11 (10). The thermally-sprayed glass portion 20 is formed on the surface of the metallic base 11 such as a steel plate by thermal spraying. As a result, the steel plate has impact resistance, corrosion resistance, for example. In FIG. 1B, a plate-shaped metallic base 12 (10) is prepared. The plate-shaped metallic base 12 (10) has a hole portion 15 into which a bolt, rivet, for example is inserted when connecting the plate-shaped metallic base 12 (10) to other members. FIG. 1B illustrates a metallic glass composite 1B in which the thermally-sprayed glass portion 20 is formed on the surface of the metallic base 12. The thermally-sprayed glass portion 20 is deposited on and around the hole portion 15. This increases resistance to wear, corrosion, for example, caused by contact between metals.

FIG. 1C illustrates a metallic glass composite 1C in which the thermally-sprayed glass portion 20 is formed on a surface of a metallic base 13 (10) formed of a tubular material. The metallic glass composite 1C may be combined with an electrode of another cylindrical body to form an electrode for silent electric discharge (*see* Patent Document 1, for example). An insulating property derived from the glassy substance of the thermally-sprayed glass portion 20 is utilized. In FIG. 1D, a bolt is used as a metallic base 14 (10). The thermally-sprayed glass portion 20 is formed on a surface of the bolt to improve corrosion resistance of the bolt and enhance resistance to breakage, for example, of the bolt, which may be caused by a corrosion-based vulnerability. The metallic glass composites illustrated in FIGS. 1A to 1D are merely examples and are not limited to forms described herein.

In the metallic glass composite according to the example embodiment, a thickness of the thermally-sprayed glass portion 20 is in a range of 10 and 2,000 micrometer (µm). When the thickness of the thermally-sprayed glass portion 20 is less than 10 µm, the molten glassy substance may have a striped shape or a spot shape on the surface of the metallic base 10. This makes it difficult to homogenize the deposition of the glassy substance. Further, when the thickness of the thermally-sprayed glass portion 20 is excessively thick, exceeding 2,000 µm, a difference in thermal expansion coefficient between the metallic base 10 and the thermally-sprayed glass portion 20 may occur, which causes cracking and peeling. In particular, this makes it further difficult to control air bubbles included in the thermally-sprayed glass portion 20, which will be described later.

In the manufacture of the metallic glass composite according to an example embodiment, the difference in thermal expansion coefficient (linear expansion coefficient) due to the type of metal included in the metallic base, particularly a type of ferrous material (ferrous alloy), depends on a composition of the glass material constituting the thermally-sprayed glass portion. In the metallic glass composite according to an example embodiment, a body-centered cubic ferrous material and a face-centered cubic ferrous material may be mainly used as a material of the metallic base.

An example of the body-centered cubic ferrous material may include martensitic stainless steel, ferritic stainless steel, for example, and may include stainless steel such as SUS409, SUS420, SUS430, for example, or a general structural rolled steel such as SS400. In an example embodiment described later, SUS409 and SS400 are used. An example of the face-centered cubic ferrous material may include SUS304, SUS310, SUS316, for example, which is an austenitic stainless steel, for example. In an example embodiment described later, SUS304 is used.

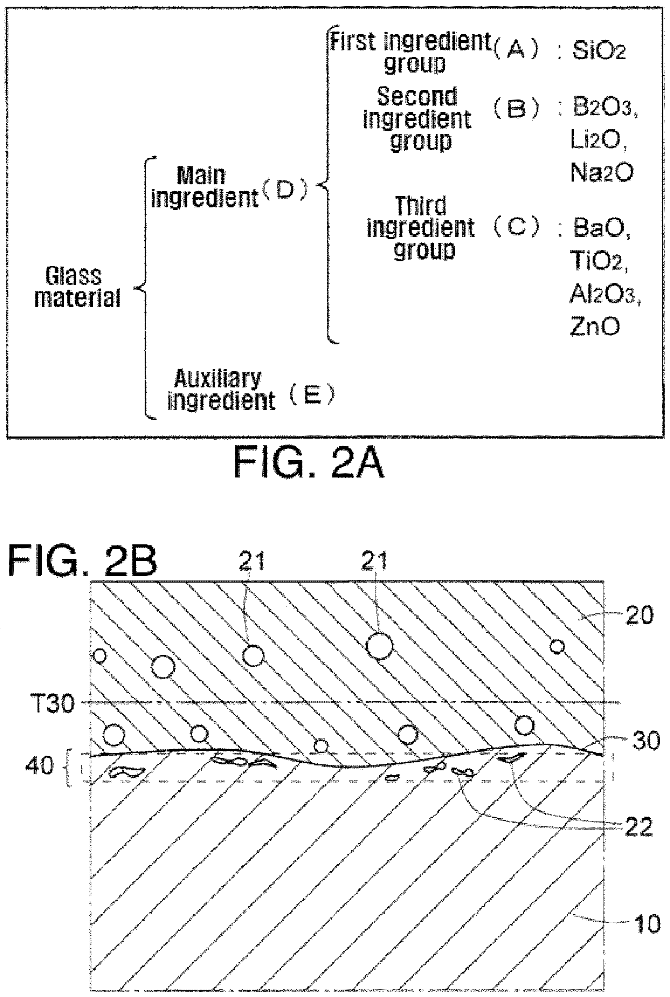

The composition of the glass material constituting the thermally-sprayed glass portion needs to be adjusted in conformity to the type of metal included in the metallic base. FIG. 2A is a schematic view illustrating an outline of the composition of the glass material constituting the thermally-sprayed glass portion. First, a main ingredient D is composed of a first ingredient group A, a second ingredient group B, and a third ingredient group C. The main ingredient D of the glass material per unit mass is mass 90% or more. The glass material includes an auxiliary ingredient E as additional ingredient. Of course, impurities may be unavoidably mixed with the glass material. Herein, the terms "-mass%" and"---weight%" will be used synonymously. A ratio between the first ingredient group A, the second ingredient group B, and the third ingredient group C in terms of mass% varies exclusively depending on the body-centered cubic ferrous material or the face-centered cubic ferrous material.

The first ingredient group A includes an ingredient SiO₂. SiO₂ of the first ingredient group A is a main ingredient of the glass material constituting the thermally-sprayed glass portion, which mainly increases corrosion resistance, hardness (wear resistance), antifouling property, electrical insulation property, voltage resistance property, for example. In the case in which the metallic base is made of the body-centered cubic ferrous material, the glass material of 35 to 70 mass% is mixed. Further, in the case in which the metallic base is made of the face-centered cubic ferrous material, the glass material of 50 to 60 mass% is mixed.

When the mixing ratio of SiO₂ in the first ingredient group A falls below a lower limit, the property such as the corrosion resistance of the thermally-sprayed glass portion to be finally formed may be reduced. Further, a time-dependent change such as whitening of the thermally-sprayed glass portion is likely to occur. When the mixing ratio of SiO₂ in the first ingredient group A exceeds an upper limit, a surface of the thermally-sprayed glass portion subjected to the thermal spraying is less likely to be flat. During the thermal spraying, the metallic base to be thermally sprayed is heated to a thermal deformation temperature or higher (1,000 degrees C or higher). A refractoriness of the glass material itself increases with an increase in the amount of SiO₂, which reduces fusibility during plasma spraying. This increases load to the thermal spraying apparatus and makes it difficult to obtain the smoothness of the thermally-sprayed glass portion after melting.

The thermal expansion coefficient of SiO₂ is smaller than that of each ingredient described below. The increase in the amount of SiO₂ causes an increase in the thermal expansion coefficient of the entire glass material. Further, during the plasma spraying, the fusibility is low and viscosity is high. In this example, SiO₂ is employed from the viewpoint of adjusting the thermal expansion coefficient of the metallic base made of the body-centered cubic ferrous material or adjusting the thermal expansion coefficient of the metallic base made of the face-centered cubic ferrous material, and in consideration of the corrosion resistance, the thermal spraying and the ease of the melting. Further, the maxing ratio of the glass material is determined in consideration of the adjustment of the thermal expansion coefficient and the composition of the metallic base described above.

The second ingredient group B is mainly used to adjust the fusibility and low viscosity of the glass material during melting, and includes B₂O₃, Li₂O, and Na₂O. The total amount of the second ingredient group B and an amount of each ingredient included in the second ingredient group B are adjusted such that the thermal expansion coefficient of the glass material is close to the thermal expansion coefficient of the metallic base.

B₂O₃ serves to promote the fusibility and low viscosity of the glass material during the plasma spraying. Therefore, B₂O₃ is indispensable in adjusting actions of SiO₂ and other ingredients. The thermal expansion coefficient of B₂O₃ is as small as that of SiO₂. However, unlike SiO₂, B₂O₃ reduces the corrosion resistance, the hardness (wear resistance), the electrical insulation property, and the voltage resistance property, thereby promoting the time-independent change. For this reason, the increase in the amount of B₂O₃ impairs the properties of the thermally-sprayed glass portion. B₂O₃ is easy to volatilize by heating during the thermal spraying. Controlling the volatilization of B₂O₃ is also difficult. With the volatilization of B₂O₃, the thermal expansion coefficient of the glass material at a design time changes.

In the case of the metallic base made of the body-centered cubic ferrous material, B₂O₃ is mixed at 9 to 15 mass% in the glass material. Further, in the case of the metallic base made of the face-centered cubic ferrous material, B₂O₃ is mixed at 2 to 8 mass% in the glass material. When the mixing ratio of B₂O₃ exceeds an upper limit, peeling or intrusion (cracking) is likely to occur on the film of the glassy substance of the thermally-sprayed glass portion formed on the surface of the metallic base. When the mixing ratio of B₂O₃ falls below a lower limit, the fusibility and low viscosity of the glass material during the plasma spraying may not be sufficiently obtained. This makes B₂O₃ unavailable as a suitable glass material.

Li₂O serves to promote the fusibility and low viscosity of the glass material during the plasma spraying. Therefore, Li₂O is indispensable in adjusting actions of SiO₂ and other ingredients. Further, Li₂O is less likely to volatilize relatively even during the plasma spraying and has a thermal expansion coefficient higher than those of other ingredients. For this reason, Li₂O functions as a buffer material from the viewpoint of adjusting the thermal expansion coefficients of other ingredients and obtaining a desired property of the film of the glassy substance of the thermally-sprayed glass portion. Li₂O serves to reduce corrosion resistance to acid and alkalis, and hardness (wear resistance). Further, the glass material is more likely to recrystallize (become lithium silicate crystal) during the thermal spraying. With the recrystallization of the glass material, the corrosion resistance, for example, is further improved. However, the thermal expansion coefficient of the film of the glassy substance, which is formed by the recrystallization, is reduced. The reduction of the thermal expansion coefficient is hard to be controlled, which causes intrusion (cracking) on a surface of a coating target film.

In the case of the metallic base made of the body-centered cubic ferrous material, Li₂O is mixed at 5 to 9 mass% in the glass material. Further, in the case of the metallic base made of the face-centered cubic ferrous material, Li₂O is mixed at 8 to 15 mass% in the glass material. When the mixing ratio of Li₂O exceeds an upper limit, in addition to matters such as the above-described peeling, for example, the electrical insulation property, and the voltage resistance property, the corrosion resistance, for example, may be greatly reduced. When the mixing ratio of Li₂O falls below a lower limit, the fusibility and low viscosity of the glass material during the plasma spraying may not be obtained.

Na₂O serves to increase the fusibility of the glass material during the plasma spraying according to an amount of Na₂O to be mixed in the glass material and increase viscosity of the glass material during melting. For this reason, the glass material thermally-sprayed on the surface of the metallic base, which is a thermally-sprayed target, is easily deposited on the surface of the metallic base. Thus, an adhesion strength between the thermally-sprayed glass portion and the surface of the metallic base is increased. Further, a fluidity of the glass material itself in a molten state, which is deposited on the surface of the metallic base, is decreased somewhat with the increase in the viscosity of the glass material caused by Na₂O. This suppresses movement of air bubbles introduced during the thermal spraying (situation in which the air bubbles gather due to its own fluidities) (which will be described in following example embodiments). Na₂O serves to improve the smoothness of the thermally-sprayed glass portion after the plasma spraying, greatly reduce a film thickness of the thermally-sprayed glass portion, and increase the electrical insulation property and the voltage resistance property of the thermally-sprayed glass portion. In addition, Na₂O has the same mass ratio (weight ratio) as that of Li₂O, it improves the electrical insulation property and the voltage resistance property, and also provides good functionality.

The thermal expansion coefficient of Na₂O is large next to Li₂O. Thus, by adding the thermal expansion coefficient of Na₂O to a thermal expansion coefficient of the metallic base made of the body-centered cubic ferrous material, or the metallic base made of the face-centered cubic ferrous material, which is a thermally-sprayed target, it is possible to easily design the thermal expansion coefficient of the glass material. In this case, an amount of Na₂O to be added depends on a ratio of Na₂O to Li₂O. Particularly, the viscosity during melting, which is obtained by adding Na₂O, is different from that obtained by adding Al₂O₃ or CaO during melting (to be described later). In the case of Na₂O, the viscosity during melting tends to be increased approximately linearly with an increase in the additive amount thereof. Meanwhile, in the case of Al₂O₃ or CaO, the viscosity during melting is suitably changed with an increase in the additive amount thereof. For this reason, Na₂O is suitably used from the viewpoint of easily controlling the viscosity when melting the glass material.

However, Na₂O is likely to volatilize by the plasma spraying like B₂O₃. The volatility of Na₂O is larger than that of Li₂O. Na₂O and B₂O₃ are greatly different in thermal expansion coefficient from each other. In the case of the metallic base made of the body-centered cubic ferrous material, Na₂O is mixed at 4 to 10 mass% in the glass material. Further, in the case of the metallic base made of the face-centered cubic ferrous material, Na₂O is mixed at 8 to 20 mass% in the glass material.

An upper limit of the mixing ratio of Na₂O is in a range taking into consideration a thermal expansion coefficient of the metallic base made of the body-centered cubic ferrous material, or the metallic base made of the face-centered cubic ferrous material, which is a thermally-sprayed target. In particular, when the mixing ratio of Na₂O is 20 mass% or more, the composition of the thermally-sprayed glass portion itself after the thermal spraying changes greatly with the volatilization of Na₂O, which may cause peeling of the thermally-sprayed glass portion from the surface of the metallic base, or cracking on the thermally-sprayed glass portion. Further, the glass material is melted inside the thermal spraying apparatus (to be described later) and becomes a filamentous form. This hinders a uniform thermal spraying. When the thermally-sprayed glass portion is formed of a glass material containing a large amount of Na₂O, the corrosion resistance and the hardness (wear resistance) thereof is prone to be degraded. Further, when the maxing ratio of Na₂O falls below a lower limit, an improvement in the fusibility of the glass material and an improvement in the viscosity of the glass material during the melting may not be ensured, which makes it difficult to obtain a desired electrical insulation property and voltage resistance property.

Each of the ingredients B₂O₃, Li₂O, and Na₂O included in the second ingredient group Bis likely to relatively volatilize at the time of heating the glass material by the plasma spraying. When the thermally-sprayed glass portion derived from the glass material in a molten state is formed on the surface of the metallic base, air bubbles may be inevitably introduced. Therefore, the glass material used for the metallic glass composite according to an example embodiment needs to have capabilities such as ensuring a function attributed to the second ingredient group B, converging the composition of the glass material in consideration of the thermal expansion coefficient of the material of the metallic base, and suppressing the generation of the air bubbles in the thermally-sprayed glass portion. When the amount of air bubbles in the thermally-sprayed glass portion is excessively large, a denseness of the thermally-sprayed glass portion itself may be degraded, which may cause a partial reduction in strength. Further, an insulation breakdown is likely to occur due to a fluctuation in dielectric constant of the thermally-sprayed glass portion.

Therefore, in the case in which the ingredients of the second ingredient group Bare employed as the glass material used for the metallic glass composite according to an example embodiment, when the metallic base is made of the body-centered cubic ferrous material, the total maxing ratio of the second ingredient group B in the glass material is 18 to 30 mass%. Further, when the metallic base is made of the face-centered cubic ferrous material, the total maxing ratio of the second ingredient group Bin the glass material is 25 to 35 mass%.

The third ingredient group C includes ingredients which are mixed with mainly assist the formation of the glassy substance of the thermally-sprayed glass portion after the thermal spraying. The third ingredient group C includes ingredients such as BaO, TiO₂, Al₂O₃, and ZnO.

BaO is an ingredient serving to assist the formation of the glassy substance of SiO₂ as the glass material. The fusibility of the glass material increases as the mixing ratio of BaO increases, and a softening temperature of the glass material during the thermal spraying decreases. BaO provides an effect smaller than that of increasing the viscosity of the glass material by Na₂O. However, by mixing BaO, the adhesion strength of the thermally-sprayed glass portion on the surface of the metallic base is increased. Thus, BaO improves the smoothness of the film of the glass substance of the thermally-sprayed glass portion formed after the plasma spraying. Thus, BaO contributes to thin a film thickness of the formed thermally-sprayed glass portion. Further, BaO increases the electrical insulation property, the voltage resistance property, and a relative dielectric constant of the formed thermally-sprayed glass portion. When BaO is mixed at the same ratio as the alkali ingredient such as Li₂O, Na₂O, for example, BaO provides properties better than the electrical insulation property and the voltage resistance property provided by Li₂O, Na₂O, for example.

Thus, in the case of the metallic base made of the body-centered cubic ferrous material, the maxing ratio of BaO is 0 to 15 mass% in the glass material. Further, in the case of the metallic base made of the face-centered cubic ferrous material, the maxing ratio of BaO is 3 to 12 mass% in the glass material. When the maxing ratio of BaO included in the glass material exceeds an upper limit, the viscosity of the glassy substance of the thermally-sprayed glass portion obtained when performing the plasma spraying on the glass material is extremely high. As a result, the glass material in a molten state is melted inside the thermal spraying apparatus (to be described later) and becomes a filamentous form, which hinders uniform thermal spraying. For example, a film of the thermally-sprayed glass portion formed after the thermal spraying has poor corrosion resistance, for example, so that the glass material is vulnerable to a time-dependent change. In the case of the metallic base made of the body-centered cubic ferrous material, the lower limit of the maxing ratio of BaO may be zero (0 mass%). Preferably, like the metallic base made of the face-centered cubic ferrous material, the lower limit of the maxing ratio of BaO is 3 mass%. The lower limit of the maxing ratio of BaO depends on maxing ratios of other ingredients. The lower limit is determined from the viewpoint of improving the electrical insulation property, and the voltage resistance property, the corrosion resistance, the relative dielectric constant, for example, of the thermally-sprayed glass portion formed as above, and enhancing the adhesion strength between the film of glassy substance and the surface of the coating target film.

TiO₂ is an ingredient serving to assist the formation of the glassy substance of SiO₂ as the glass material. The hardness (wear resistance) of the film of the glassy substance of the thermally-sprayed glass portion formed is increased with an increase in maxing ratio of TiO₂. In addition, TiO₂ improves the corrosion resistance, the electrical insulation property, and the voltage resistance property of the glass material. TiO₂ increases the viscosity of the glass material after the thermal spraying. Thus, in the case of the metallic base made of the body-centered cubic ferrous material, the maxing ratio of TiO₂ in the glass material is 2 to 15 mass%. Further, in the case of the metallic base made of the face-centered cubic ferrous material, the maxing ratio of TiO₂ in the glass material is 4 to 15 mass%.

In a case in which the maxing ratio of TiO₂ exceeds an upper limit, the glassy substance is crystallized when the glass material melted by heat during the plasma spraying is cooled (slowly cooled) and becomes the thermally-sprayed glass portion. That is, the thermal expansion coefficient is decreased and peeling is likely to occur. The crystallization of the glassy substance significantly reduces the hardness, the corrosion resistance, for example. When the maxing ratio of TiO₂ falls below a lower limit, although varying depending on maxing ratios of other ingredients, it is difficult to improve the electrical insulation property, the voltage resistance property, the relative dielectric constant, for example, of the thermally-sprayed glass portion formed as above, and enhance the fusibility of the glass material during melting by the plasma spraying.

Al₂O₃ is an ingredient serving to assist the formation of the glassy substance of SiO₂ as the glass material. Al₂O₃ serves to improve the corrosion resistance, the hardness (wear resistance), the electrical insulation property, the voltage resistance property, for example, of the glassy film of the thermally-sprayed glass portion formed by melting the glass material, and to prevent recrystallization. From the viewpoint of improving the recrystallization of the glassy substance of the thermally-sprayed glass portion by maxing Li₂O, Al₂O₃ may be preferably mixed. Thus, in the case of the metallic base made of the body-centered cubic ferrous material, the maxing ratio of Al₂O₃ in the glass material is 0 to 8 mass%. Further, in the case of the metallic base made of the face-centered cubic ferrous material, the maxing ratio of Al₂O₃ in the glass material is 0 to 5 mass%. When the maxing ratio of Al₂O₃ exceeds an upper limit, the fusibility of the glass material during the plasma spraying is decreased, which significantly reduces the viscosity of the glass material. The lower limit of the maxing ratio of Al₂O₃ may be zero (0 mass%), alternatively 2 mass%. By maxing Al₂O₃, the corrosion resistance of the thermally-sprayed glass portion may be improved and the recrystallization of the thermally-sprayed glass portion may be prevented.

ZnO is an ingredient for assisting the formation of the glassy substance of SiO₂ as the glass material. When the maxing ratio of ZnO is increased like BaO, the fusibility of the glass material is increased and a softening temperature of the glass material during welding is decreased. Although ZnO provides an effect smaller than that of increasing the viscosity of the glass material by Na₂O, it increases the adhesion strength between the thermally-sprayed glass portion and the surface of the metallic base. Thus, like BaO, ZnO improves the smoothness of the glassy film of the thermally-sprayed glass portion formed after the plasma spraying. Thus, ZnO contributes to thin a film thickness of the glass substance of the thermally-sprayed glass portion. Further, ZnO increases the electrical insulation property, the voltage resistance property, and the relative dielectric constant of the formed thermally-sprayed glass portion. When ZnO is mixed at the same ratio as the alkali ingredient such as Li₂O, Na₂O, for example, ZnO provides properties better than the electrical insulation property and the voltage resistance property provided by Li₂O, Na₂O, for example.

In the case of the metallic base made of the body-centered cubic ferrous material, the maxing ratio of ZnO in the glass material is 0 to 15 mass%. Further, in the case of the metallic base made of the face-centered cubic ferrous material, the maxing ratio of ZnO in the glass material is 0 to 5 mass%. When the maxing ratio of ZnO exceeds an upper limit, the viscosity of the glass material during melting by the plasma spraying is increased. As a result, the glass material in a molten state is melted inside a thermal spraying apparatus (to be described later) and is changed into a filamentous form, which inhibits uniform thermal spraying. For example, the glassy substance of the thermally-sprayed glass portion formed after the thermal spraying may be crystalized, which reduces the thermal expansion coefficient and causes peeling-off. As a result, the corrosion resistance, for example, of the glassy film of the thermally-sprayed glass portion is degraded so that the glassy substance is vulnerable to a time-dependent change. In particular, this makes it difficult to control the crystallization of the glassy substance. The lower limit of the maxing ratio of ZnO may be zero (0 mass%) regardless of the metallic base made of the body-centered cubic ferrous material and the metallic base made of the face-centered cubic ferrous material. Preferably, the lower limit of the maxing ratio of ZnO may be 2 mass%. The lower limit of the maxing ratio of ZnO depends on maxing ratios of other ingredients. The lower limit of the maxing ratio of ZnO contributes to improve the electrical insulation property, and the voltage resistance property, the corrosion resistance, the relative dielectric constant, for example, of the glassy substance of the thermally-sprayed glass portion formed after the thermal spraying, and enhance the adhesion strength between the glassy substance and the surface of the coating target film.

The third ingredient group C is provided for the purpose of improving the performance of the glassy substance of the thermally-sprayed glass portion formed after the thermal spraying. Thus, as described above, the ingredients included in the third ingredient group C may be omitted depending on an intended use, a function, for example, of the metallic glass composite. Further, the maxing ratio of each ingredient of the third ingredient group C may be adjusted to balance the first ingredient group A and the second ingredient group B, and adjust the thermal expansion coefficient. Therefore, in the case in which the ingredients of the third ingredient group Care employed as the glass material used for the metallic glass composite according to an example embodiment, when the metallic base is made of the body-centered cubic ferrous material, the total maxing ratio of the third ingredient group C in the glass material is 10 to 30 mass%. Further, when the metallic base is made of the face-centered cubic ferrous material, the total maxing ratio of the third ingredient group C in the glass material is 10 to 20 mass%.

In the glass material used for the metallic glass composite according to an example embodiment, the main ingredient D is the sum of the first ingredient group A, the second ingredient group B, and the third ingredient group C. The mixing ratio of the main ingredient D in the glass material is 90 mass% or more. The entire glass material may be composed of only the main ingredient D except for inevitably-mixed impurities. Further, an auxiliary ingredient E may be additionally mixed in addition to the main ingredient D in consideration of an intended use or durability of the metallic glass composite.

The auxiliary ingredient E may be mixed as a glass material composed of oxide species of the above-described main ingredient D to facilitate the thermal spraying, stabilize the property of the glassy substance obtained by melting the glass material (specifically, the glassy film of the thermally-sprayed glass portion), and increase or additionally add functionality. The auxiliary ingredient E may be included in the glass material at 0 to 10 mass% to balance the composition. A composition ingredient included in the auxiliary ingredient E may be classified by functionality.

CaO serves to improve the corrosion resistance, the hardness (wear resistance), for example. In addition, CaO serves to increase the fusibility of the glass material during the thermal spraying and reduce the softening temperature of the glass material during the thermal spraying. This increases the adhesion strength between the thermally sprayed glass material and the surface of the metallic base. In the presence of BaO, when a slight amount of CaO is mixed, the transparency of the glassy film of the thermally-sprayed glass portion is improved. In addition, although varying depending on mixing ratios of other alkaline components, when a large amount of CaO is mixed, the corrosion resistance and the hardness are reduced and the fusibility of the glass material during the thermal spraying is also deteriorated.

SrO serves to increase the fusibility of the glass material during the thermal spraying and reduce the softening temperature of the glass material during the thermal spraying. Thus, the adhesion strength between the thermally sprayed glass material and the surface of the metallic base is increased. SrO is unlikely to volatilize during the thermal spraying. When a large amount of SrO is added, the thermally-sprayed glass portion may be crystallized while being slowly cooled, which causes peeling.

Ingredients such as MgO, P₂O₅, K₂O, V₂O₅, MnO₂, Fe₂O₃, Co₃O₄, NiO₂, CuO, MoO₃, SnO₂, PbO, BiO₂, or Lu₂O₃ serve to increase the fusibility of the glass material during the thermal spraying and increase the softening temperature of the glass material during the thermal spraying. Thus, the adhesion strength between the thermally sprayed glass material and the surface of the metallic base is increased. However, according to an amount of ingredient added, the corrosion resistance, the hardness (wear resistance), the electrical insulation property, and the voltage resistance property may be reduced, or the viscosity of the glassy substance during the thermal spraying may be suddenly increased.

Ingredients such as Cr₂O₃, ZrO₂, and WO₃ serve to increase the hardness (wear resistance) of the glassy film of the thermally-sprayed glass portion. Among these ingredients, ZrO₂ serves to improve the corrosion resistance, the electrical insulation property, and the voltage resistance property. Sb₂O₃ serves to decrease and reduce an amount of air bubbles in the glass material deposited on the surface of the metallic base by the thermal spraying. However, according to an amount of Sb₂O₃ added, the viscosity of the glassy substance during melting may be suddenly increased.

Ingredients such as Y₂O₃, Nb₂O₅, Ta₂O₃, Bi₂O₃, La₂O₃, CeO₂, Pr₆O₁₁, Nd₂O₃, Sm₂O₃, and Gd₂O₃ serve to improve the electrical insulation property and the voltage resistance property of the thermally-sprayed glass portion formed on the surface of the metallic base. However, according to an amount of ingredient added, a melting temperature of the glass material may be increased, and the fusibility of the glass material during the thermal spraying may be reduced. Further, the viscosity of the glass material during melting may be suddenly increased.

The metallic glass composites 1A, 1B, 1C, and 1D illustrated in the schematic views of FIGS. 1A to 1D are fabricated substantially in the following procedure. First, a metallic base, which is a thermally spraying target, is prepared. A surface of the metallic base is subjected to blasting. In the blasting treatment, fine particles such as Al₂O₃ (alundam), SiC (carborundum), for example, are injected onto the surface of the metallic base. The surface of the metallic base is roughened by sandblasting, which improves the transfer of heat to the metallic base at the time of heating (to be described later). Further, the blasting is optional, and may be appropriately selected according to a shape or a thermal spraying site of the metallic base.

The surface of the metallic base may be heated at 200 to 1,000 degrees C, preferably 500 to 1,000 degrees C, more preferably 700 to 1,000 degrees C. An electrically heated reactor, for example, may be used for the heating. The heating is performed to sustain the molten state of the glass material before the thermal spraying (to be described later). Further, when the metallic base is at room temperature, the deposition of the glass material in the molten state on the metallic base is extremely degraded.

The plasma spraying apparatus disclosed in Patent Document 2, for example, is used for the thermal spraying. The glass material is glassy powder (frits) containing the above-described composition ingredients. The glass material is supplied in a powder form to the plasma spraying apparatus. In the presence of a carrier gas, the glass material is instantaneously melted in the plasma spraying apparatus, and is injected onto a surface of the heated metallic base so that the molten glass material is deposited on the surface. An amount of the glass material injected onto the surface of the metallic base and the number of executions of the thermal spraying are adjusted to control a thickness of the glassy film of the thermally-sprayed glass portion is adjusted. In Examples described later, an argon gas or dry air is used as the carrier gas.

The thickness of the glassy film of the thermally-sprayed glass portion may be set in a relatively wide range of 10 to 2,000 µm. For example, the thickness of the glassy film when using a printing roll, for example, may be in a range of 1,000 to 2,000 µm. Further, in the case of an electrode for silent discharge, the thickness of the glassy film may be in a range of 300 to 1,500 µm. Further, in the case of a bolt, the thickness of the glassy film may be in a range of 10 to 100 µm. Of course, the above-described thicknesses may be merely examples and may be adjusted in consideration of an intended use, durability, for example, of the metallic glass composite.

After the thermal spraying, the thermally-sprayed glass portion formed on the surface of the metallic base is slowly cooled or air-cooled. Thereafter, the surface may be polished or grinded as necessary to finish the surface smoothly. In this way, the metallic glass composites 1A to 1D as illustrated in the schematic views of FIGS. 1A to 1D are fabricated.

In order to firmly keep the adhesion state between the metallic base and the thermally-sprayed glass portion, the thermal expansion coefficients of the metallic base and the thermally-sprayed glass portion need to coincide with each other as much as possible. As described above, in the cooling process after the thermal spraying, both the metallic base and the thermally-sprayed glass portion undergo a volume shrinkage. However, when the thermal expansion coefficients are different from each other, a difference in the volume shrinkage between the metallic base and the thermally-sprayed glass portion may occur. As a result, a gap may be generated between the metallic base and the thermally-sprayed glass portion, or the thermally-sprayed glass portion may be cracked. This deteriorates the adhesion state.

In the metallic base made of the body-centered cubic ferrous material, for example, a linear expansion coefficient of SUS409 is 9.9 (×10⁻⁶/degrees C), and a linear expansion coefficient of SS400 is 12 (×10⁻⁶/degrees C). Thus, in conformity to the linear expansion coefficient of the metallic base made of the body-centered cubic ferrous material, a value of the linear expansion coefficient of the glass material used as a material of the thermally-sprayed glass portion may range from 9 to 11 (×10⁻⁶/degrees C) in a range of room temperature to 300 degrees C.

In the metallic base made of the face-body-centered cubic ferrous material, for example, a linear expansion coefficient of SUS304 is 17.3 (×10⁻⁶/degrees C). Thus, in conformity to the linear expansion coefficient of the metallic base made of the face-centered cubic ferrous material, a value of the linear expansion coefficient of the glass material used as a material of the thermally-sprayed glass portion may range from 14 to 17 (×10⁻⁶/degrees C) in a range of room temperature to 300 degrees C.

The thermal expansion coefficients of the metallic base and the thermally-sprayed glass portion (the glass material) are adjusted such that a difference therebetween becomes smaller in addition to the above-described adjustment according to the kind of the metallic base. Specifically, the difference between the linear expansion coefficients of the glass material and the metallic base falls within a range not more than 15%. Theoretically, the linear expansion coefficients may be set to be completely equal to each other (the difference is 0%). However, in a case in which the metallic base has, for example, a curved shape, a shrinkage force of the thermally-sprayed glass portion formed after the plasma spraying may be used such that the thermally-sprayed glass portion is more firmly deposited on the surface of the metallic base.

The metallic glass composites according to the type of metallic base are exemplified as follows. Examples of a ferrous composite may include a transport rolls/roller, a plywood for a building material, for example. Examples of an alloy (stainless steel) composite may include a water source roller for printing devices, an underwater roller for zinc plating, various rolls/rollers usable at room-temperature, various rolls/rollers for heating furnace, an electrode for ozone-generating silent discharge, an electrode for plasma generation, for example. Examples of a nickel alloy composite may include various metal setters for burning a sintered body, for example. Examples of a chrome-molybdenum steel alloy composite (e.g., SCM435) may include in-car bolts (bolts for fastening different metals, and boles for fastening parts in which spark is generated due to friction or static electricity), bolts for fastening various wind-power generation parts (specifically, bolts for fastening offshore wind-power generation parts), bolts for general machine equipment, for example.

In the metallic glass composite according to an example embodiment, as illustrated in a schematic cross-sectional view of FIG. 2B, a molten solidified portion 40 is formed in an interface 30 between a metallic base 10 and a thermally-sprayed glass portion 20. In the molten solidified portion 40, the thermally-sprayed glass portion 20 is embedded inward of the metallic base 10. The molten solidified portion 40 is formed at a thickness of 0.3 µm or more. Air bubbles 21 exist in the thermally-sprayed glass portion 20, and residual glassy substances 22 exist in the metallic base 10 in the molten solidified portion 40. Symbol T30 in FIG. 2B represents a region of 30% of the thermally-sprayed glass portion 20 in a thickness direction starting from the interface 30.

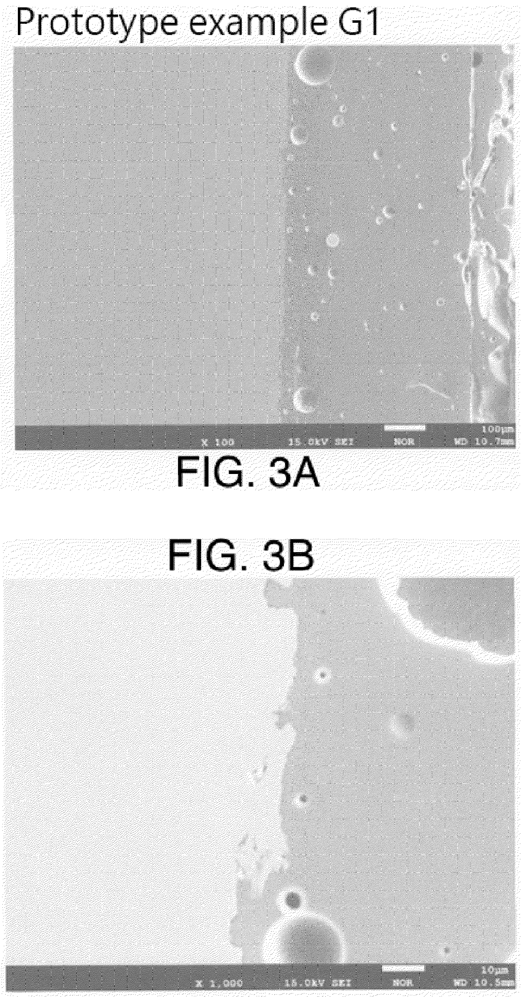

It should be noted that, in the metallic glass composite according to an example embodiment, the molten glass material thermally sprayed to the metallic base is not merely formed (deposited) on the surface of the metallic base. Specifically, it is observed by a scanning electron microscope (SEM) that the metallic base in a heated state and the glass material in a molten state are mixed with each other in a surface layer portion of the metallic base (in the interface), and the glass material in a molten state partially moves inward of the metallic base (*see* electron micrograph photographs illustrated in FIG. 3 and subsequent figures). As a result, after the cooling, the molten solidified portion 40 in which the thermally-sprayed glass portion is partially embedded in the metallic base is generated.

In the metallic glass composite according to an example embodiment, in the interface between the metallic base and the thermally-sprayed glass portion, the thermally-sprayed glass portion is not only deposited on the metallic base but also excessively moves toward the metallic base. This generates a site where both materials are mixed with each other. That is, the thermally-sprayed glass portion is not only deposited on the metallic base by the thermal spraying as in the related art but also partially embedded in the metallic base. This improves the adhesion strength between the metallic base and the thermally-sprayed glass portion. Specifically, as can be seen from a test of a falling-ball height (to be described later), the durability of the metallic glass composite may be achieved.

A reason why the molten solidified portion is formed in the metallic glass composite according to an example embodiment is attributed to conditions of the plasma spraying in which a glass material is melted and injected to the metallic base in a heating state. In other words, the reason is attributed to the fact that, since the molten glass material itself is also at a high temperature, the surface layer portion of the metallic base is further heated due to heat of the metallic base itself and heat caused by the molten glass material, and the metal is melted even in the surface layer portion of the metallic base. In addition, the molten glass material collides with the surface layer portion of the metallic base with an injection power (velocity and pressure) generated by the plasma spraying. As a result, the metallic base and the thermally-sprayed glass portion, which are in molten states, are easily mixed with each other in an extremely limited range. For this reason, it is considered that the molten solidified portion is finally formed.

In Patent Document 1 (Japanese Laid-Open Publication No. 2013-216977) in the related art, a glass material in a molten state moves onto a surface of a metallic base roughened by blasting. In contrast, the metallic glass composite according to an example embodiment has a configuration in which a molten solidified portion is formed. Thus, the present disclosure is different in structure from the related art.

Electronic microscope photographs illustrated in FIGS. 3A and 3B and subsequent figures, illustrate cross-sections of Prototype examples of the metallic glass composite. In particular, as can be seen from magnified photographs of FIGS. 3B, 4B, 5B, 6B, 7B, 8B and 9B, it is confirmed that the molten solidified portion has a thickness of 0.3 µm or more. An upper limit of the molten solidified portion does not exceed the total thickness of the thermally-sprayed glass portion. For this reason, the upper limit of the molten solidified portion is considered to have a thickness of 1 µm or less. As can be seen from each photograph, the interface in the metallic glass composite according to the example embodiment is a portion at which the thermally-sprayed glass portion is in contact with the metallic base. The molten solidified portion is a portion in which the glass material is confined and scattered in the metallic base. The molten solidified portion has a depth in a range in which the confined glass material exists with reference to the interface between the metallic base and the thermally-sprayed glass portion.

The description made so far relates to relationships between the compositions and the thermal expansion coefficients of the thermally-sprayed glass portion (the glass material) and the metallic base, and features of the molten solidified portion generated at the interface. Further, a provision is required to be applied after the thermally-sprayed glass portion is formed on the surface of the metallic base. Specifically, an amount of air bubbles existing in the thermally-sprayed glass portion needs to be controlled. As an example, in the fabricated metallic glass composite, an area of air bubbles having a diameter of 1 µm or more in a cross-section of the thermally-sprayed glass portion in a thickness direction is suppressed to less than 40%. At the time of measuring the air bubbles, the metallic glass composite is cut in the thickness direction of the thermally-sprayed glass portion to expose a cutaway cross-section. The cutaway cross-section is enlarged by scanning electron microscope (SEM). The area of the air bubbles having a diameter of 1 µm or more in the exposed cutaway cross-section is obtained. The total area of the air bubbles having a diameter of 1 µm or more is calculated. An area ratio of the air bubbles having a diameter of 1 µm or more is calculated as a total air-bubble area occupied by the air bubbles in the cutaway cross-section of the thermally-sprayed glass portion. That is, the area ratio of the air bubbles having a diameter of 1 µm or more is calculated as follows: "the area ratio (%) of the air bubbles having a diameter of 1 µm or more" = "{(the total air-bubble area occupied by the air bubbles in the cutaway cross-section)/(a total area of the cutaway cross-section)}×100.

As an amount of the air bubbles in the thermally-sprayed glass portion of the metallic glass composite increases, the thermally-sprayed glass portion may have a shape similar to a so-called sponge. This degrades elaborateness and deteriorates a structural strength. As illustrated in a test of measuring a falling-ball height described later, the strength to shock is decreased with an increase in the area ratio of the air bubbles in the cutaway cross-section. This means an index directly influencing the durability of the metallic glass composite. Thus, the area ratio of the air bubbles having a diameter of 1 µm or more in the cross section of the thermally-sprayed glass portion in the thickness direction may be set to less than 40%, preferably less than or equal to 30%, more preferably less than or equal to 20%.

In addition, in a case in which the metallic glass composite is used for an electrode, when the area ratio of the air bubbles is increased, dielectric breakdown, for example, is likely to occur in the thermally-sprayed glass portion at the time of supplying an electric power. This may be a cause of damaging an equipment to which the metallic glass composite is mounted. Therefore, it is important to suppress the area ratio. of the air bubbles as much as possible. As described on the ingredients of the glass material, the second ingredient group B is likely to volatilize when the glass material is melted by heat generated during the thermal spraying. At this time, the glass material is gasified to generate air bubbles. Further, the glass material melted during the thermal spraying is instantaneously applied to the surface of the metallic base and is deposited on the surface. The air bubbles generated in the glass material melted as above are not movable. As a result, the air bubbles are cooled down while being trapped in the thermally-sprayed glass portion and are left in the thermally-sprayed glass portion.

The maxing ratios of the first ingredient group A, the second ingredient group B, and the third ingredient group C in the glass material need to be set from the viewpoint of adjusting the thermal expansion coefficient of the metallic base and controlling the durability of the glassy substance, for example. Therefore, the second ingredient group Bis inevitably mixed in consideration of the gasification. As appreciated from the above, the composition of the glass material of the example embodiment may be established from the viewpoint of suppressing the air bubbles from remaining in consideration of the durability of the glass substance and adjusting the thermal expansion coefficient of the metallic base.

In the metallic glass composite according to an example embodiment, the region in which the base exists and the area ratio are defined in detail. Specifically, in the interface between the metallic base and the thermally-sprayed glass portion in a longitudinal cutaway cross-section of the metallic glass composite, the area ratio of the air bubbles having a diameter of 1 µm or more, which exist in a region of 30% or less of the thermally-sprayed glass portion in the thickness direction starting from the interface, is preferably suppressed to 50% or less. Further, the thickness of the thermally-sprayed glass portion is in a range of 10 and 100 µm, and the area ratio of the air bubbles having a diameter of 1 µm or more in the cross section of the thermally-sprayed glass portion in the thickness direction is less than 10%.

As described above, during the thermal spraying, the composition ingredient of the glass material volatilizes and gasifies by heat generated by the thermal spraying. Further, the glass material in a molten state is injected before the volatilized gas diffuses. Thus, such gas remains as air bubbles. In particular, in a deep region of the thermally-sprayed glass portion in the metallic glass composite, that is, in a region close to the metallic base, a large amount of air bubbles is inevitably generated. In order to increase the adhesion strength between the thermally-sprayed glass portion and the metallic base, it is preferable that the thermally-sprayed glass portion is densified and the size of the air bubbles is decreased.

Thus, in order to check the form of the thermally-sprayed glass portion, in the region of 30% (including 30% or less) of the thermally-sprayed glass portion in the thickness direction starting from the interface, the area ratio of the air bubbles having a diameter of 1 µm or more is suppressed to 50% or less, preferably 40% or less. Since the amount of the air bubbles in the vicinity of the interface of the thermally-sprayed glass portion is suppressed, the density of the thermally-sprayed glass portion in the vicinity of the interface is increased, which easily increases the strength.

Further, the thickness of the thermally-sprayed glass portion in the metallic glass composite may be adjusted by an amount of thermal spraying in conformity to an intended use of the thermally-sprayed glass portion. However, as the thickness of the thermally-sprayed glass portion is increased, the glassy substance is also increased. This may cause cracks in the thermally-sprayed glass portion after cooling and may degrade the durability during use. In particular, in terms of anticorrosion, insulation, for example, the thinner the thermally-sprayed glass portion, the better. Thus, the thickness of the thermally-sprayed glass portion is set in a range of 10 to 100 µm.

In the thermally-sprayed glass portion having a thickness in such a range, since the presence of the air bubbles itself is directly involved in a degradation in performance such as the durability, the insulation property, for example, the amount of the air bubbles needs to be reduced even further than the above-mentioned conditions. The area ratio of the air bubbles having a diameter of 1 µm or more in the thermally-sprayed glass portion (in the entire cross-section) is suppressed to less than 10%, preferably less than 7%.

### Example

### Type of Metallic Base

In the fabrication of the metallic glass composite, three types of plate-shaped bodies as the metallic bases (each having a size of 100 millimeter (mm)×30 mm and a thickness of 1.2 mm) as follows were used. SUS409, SUS430, and SS400 were used as the metallic base made of the body-centered cubic ferrous material. SUS304 was used as the metallic base made of the face-centered cubic ferrous material. For reference, the metal composition (mass%) and the linear expansion coefficient (×10⁻⁶/degrees C) are represented in Table 1. Each metal in Table 1 is a ferrous-based alloy. Thus, Fe is represented as a remnant.

**[Table 1]**

| | Fe | Cr | Ni | Si | Mn | C | P | S | α (×10⁻⁶/°C |
|---|---|---|---|---|---|---|---|---|---|
| SUS409 | Remnant | 10.5 | | ≤1.00 | ≤2.00 | ≤0.030 | | | 9.9 |
| SUS430 | Remnant | 18 | | ≤0.75 | ≤1.00 | ≤0.12 | ≤0.04 | ≤0.03 | 10.4 |
| SS400 | Remnant | | | | | | ≤0.05 | ≤0.05 | 12 |
| SUS304 | Remnant | 18 | 8 | ≤1.00 | ≤1.00 | ≤0.08 | ≤0.03 | ≤0.03 | 17.3 |

### Treatment of Metallic Base

Sandblasting was performed on each of the plate-shaped bodies as the metallic bases listed in Table 1 with alundum of #60 and #80, and the sandblasted surface was air-cleaned to remove dust. Before the thermal spraying, the plate-shaped bodies were heated to about 700 to 1,000 degrees C by an electrically heated reactor. The thermal spraying was performed under the below-mentioned condition before the temperature is lowered.

### Composition of Glass Material

Respective ingredients were mixed according to compositions listed in the following Table 2 to prepare glass materials of Prototype examples 1 to 16. These glass materials were pulverized into frit forms (powder forms). The frits were sorted to have a desired average gran size. In Table 2, each ingredient is represented as weight% (mass%) of the entire glass material. In addition, each of the sum of the second ingredient group B and the sum of the third ingredient group C in the entire glass material was denoted for the ease of understanding. Further, the linear expansion coefficient (α) (unit: ×10⁻⁶/degrees C) of each Prototype example is denoted.

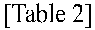

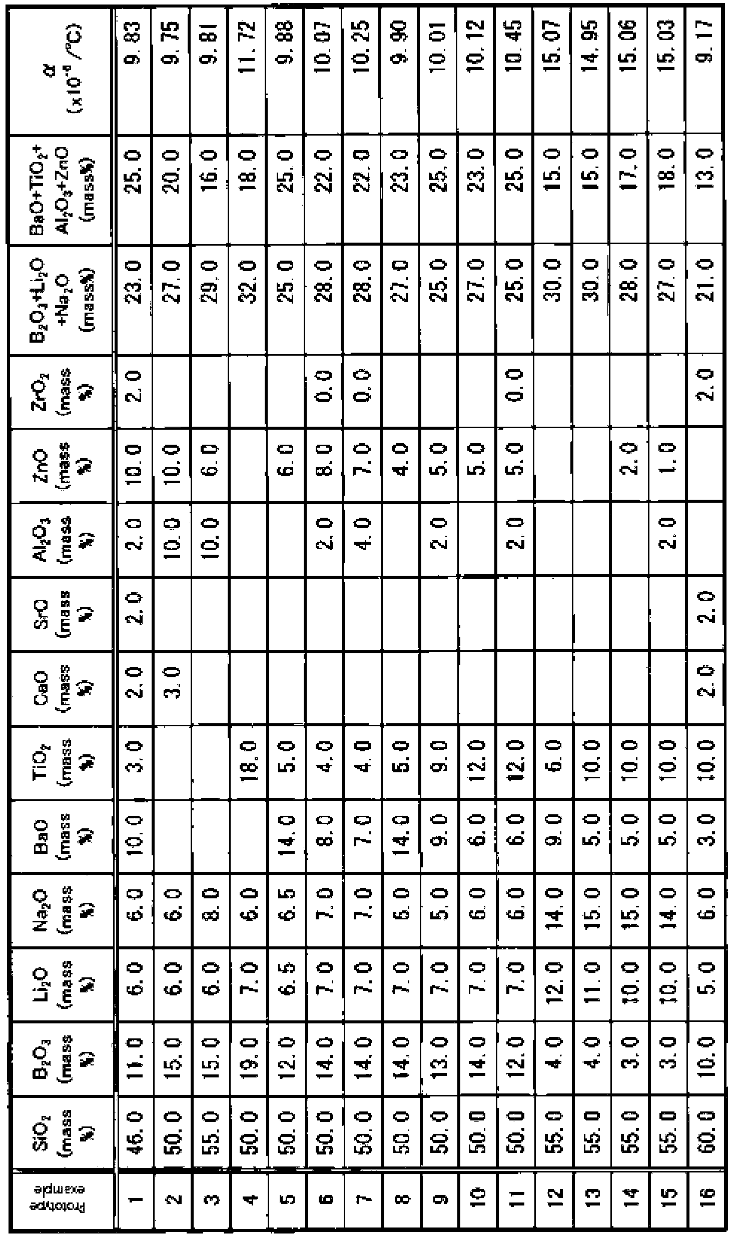

### Thermal Spraying Apparatus/Thermal-Spraying Condition

In the plasma spraying, the product name "Model SG-100 Plasma Spray Gun" manufactured by Praxair Technology, Inc. was used as the thermal spraying apparatus. Further, the product name "Model 3710 Plasma Control Console" manufactured by Praxair Technology, Inc. was used as an apparatus for controlling the supply of power, cooling water, gas, and a thermal-spraying material. The product name "Model 1264 Powder Feeder" manufactured by Praxair Technology, Inc. was used as an apparatus for supplying a glass material. The product name "Model PS-1000 Plasma Power Source" manufactured by Praxair Technology, Inc. was used as a power supply. The product name "Model HF-2200" manufactured by Praxair Technology, Inc. was used as a radio-frequency apparatus.

In the thermal spraying, a common condition was applied to the frits of the glass materials of Prototype examples 1 to 16. However, during the thermal spraying, a scanning rate of the plate-shaped body as the metallic base was increased and a deposition rate on the surface by injection was adjusted.
Thermal-spraying conditions
Voltage: 30 to 50 voltage (V)
Current: 700 to 1,000 ampere (A)
Heating temperature of metallic base: 700 to 1,000 degrees C

When each parameter of the thermal-spraying conditions falls below a respective lower limit, the influence of the shortage of heat amount is large. As a result, the glass material is hardly to be melted on the surface of the metallic base, which makes it difficult to ensure the adhesion strength. Further, when each parameter of the thermal-spraying conditions exceeds a respective upper limit, the metallic base may be excessively melted. This may modify a shape of the metallic base itself.

A type of gas and a flow rate thereof (to be described later) were used as raw material supply conditions.

A raw-material carrier gas was dry air or argon.

When the flow rate is set to Fa (NL/min) and the raw-material supply rate is set to Fb (g/min), "Fb/Fa" is controlled to 0.4 or less. When "Fb/Fa" exceeds 0.4, the base is hardly to be melted even if the above-described thermal-spraying conditions are satisfied.

### Properties of Metallic Glass Composite

Prototype examples G1 to G21 were prepared as the metallic glass composites including the metallic base made of the body-centered cubic ferrous material, and Prototype examples H1 to H8 were prepared as the metallic glass composites including the metallic base made of the face-centered cubic ferrous material. Results of Prototype examples G1 to G21 are shown in Table 3, and results of Prototype examples H1 to H8 are shown in Table 4.

In Table 3 and Table 4, the number of Prototype example, the type of glass material denoted in Table 2, the type of the metallic base, the heating temperature (degrees C) of the metallic base, the amount of current A during thermal spraying, the thickness (um) of the thermally-sprayed glass portion of the finally-finished metallic glass composite, the area ratio (%) of the air bubbles having a diameter of 1 µm or more in the entire thermally-sprayed glass portion, the area ratio (%) of the air bubbles having a diameter of 1 µm or more in the region of 30% of the thermally-sprayed glass portion in the thickness direction starting from the interface, the thickness (µm) of the molten solidified portion, the maximum diameter (µm) of the air bubbles present in the thermally-sprayed glass portion, the falling-ball height (cm), and the dielectric strength voltage test (MV/m), are sequentially denoted.

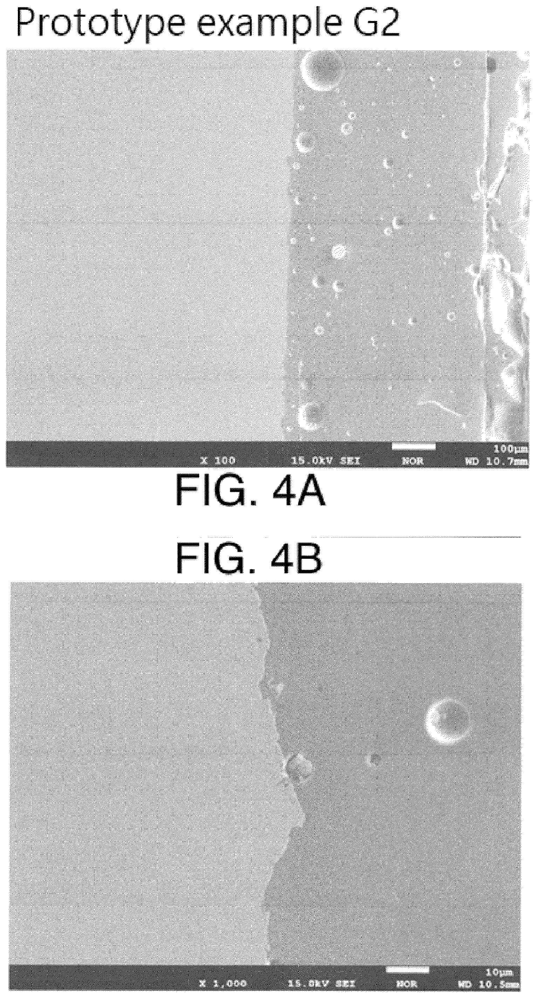

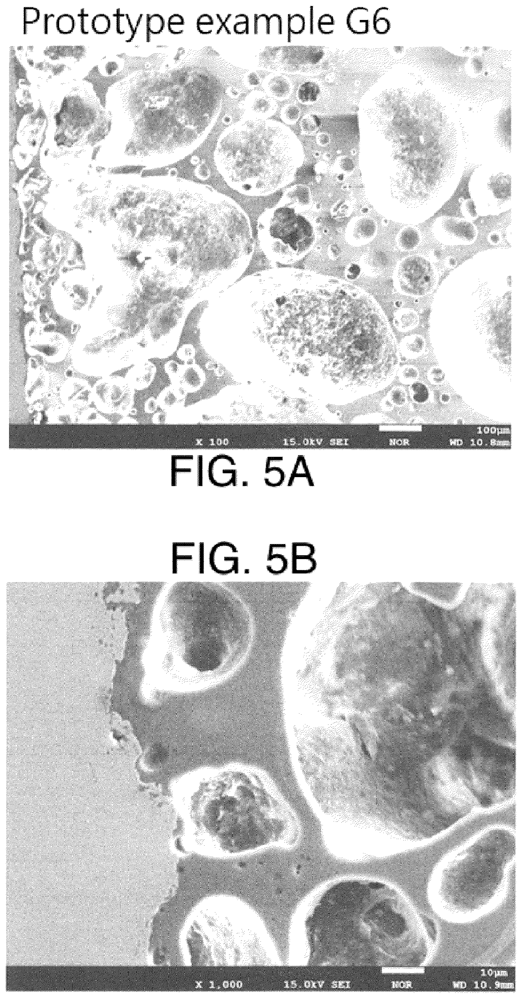

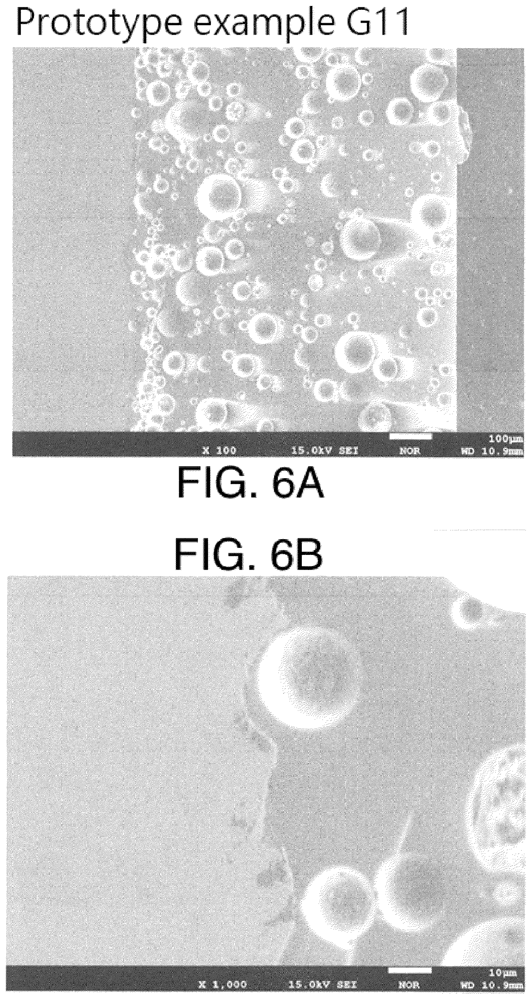

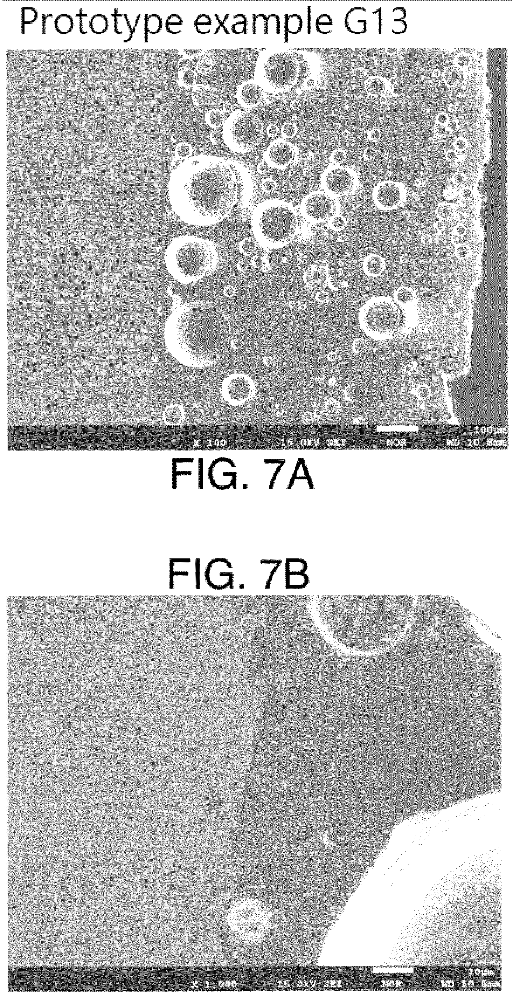

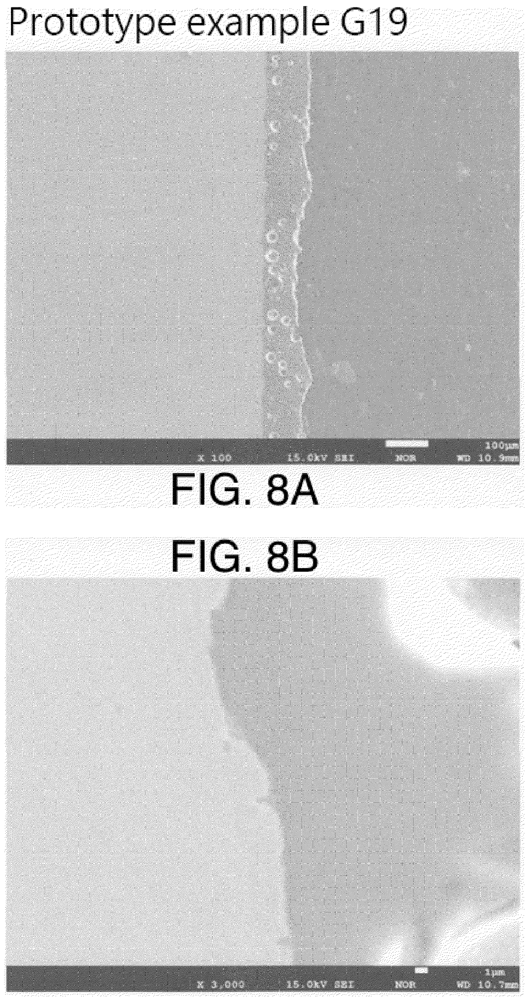

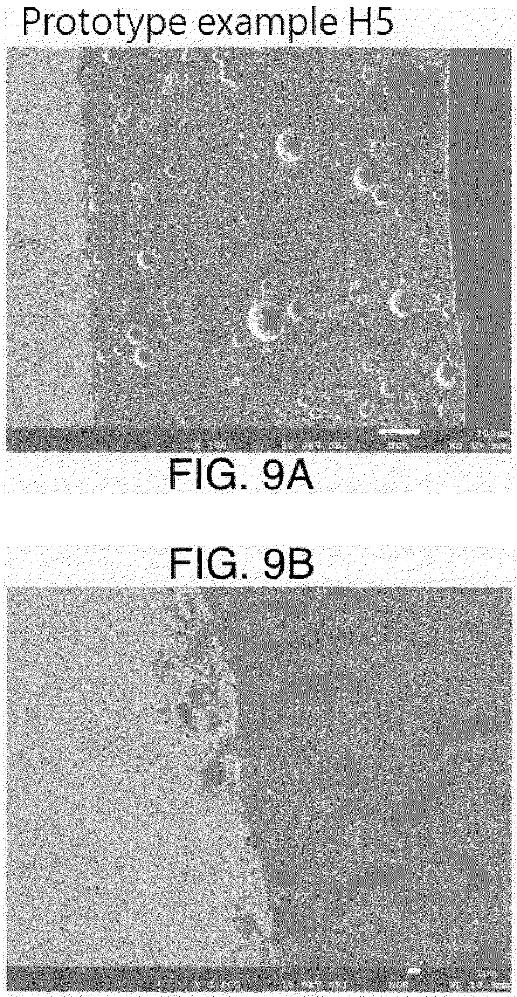

The metallic glass composite of each Prototype example was cut in the vertical direction to observe and measure the thickness and the air bubbles by the scanning electron microscope (SEM). FIGS. 3A and 3B illustrate electron microscope photographs of Prototype example G1, FIGS. 4A and 4B illustrate electron microscope photographs of Prototype example G2, FIGS. 5A and 5B illustrate electron microscope photographs of Prototype example G6, FIGS. 6A and 6B illustrate electron microscope photographs of Prototype example G11, FIGS. 7A and 7B illustrate electron microscope photographs of Prototype example G13, FIGS. 8A and 8B illustrate electron microscope photographs of Prototype example G19, and FIGS. 9A and 9B illustrate electron microscope photographs of Prototype example H5. FIGS. 3A, 4A, 5A, 6A, 7A, 8A and 9A are photographs at a magnification of 100 times, and FIGS. 3B, 4B, 5B, 6B, 7B, 8B and 9B are photographs at a magnification of 1000 times.

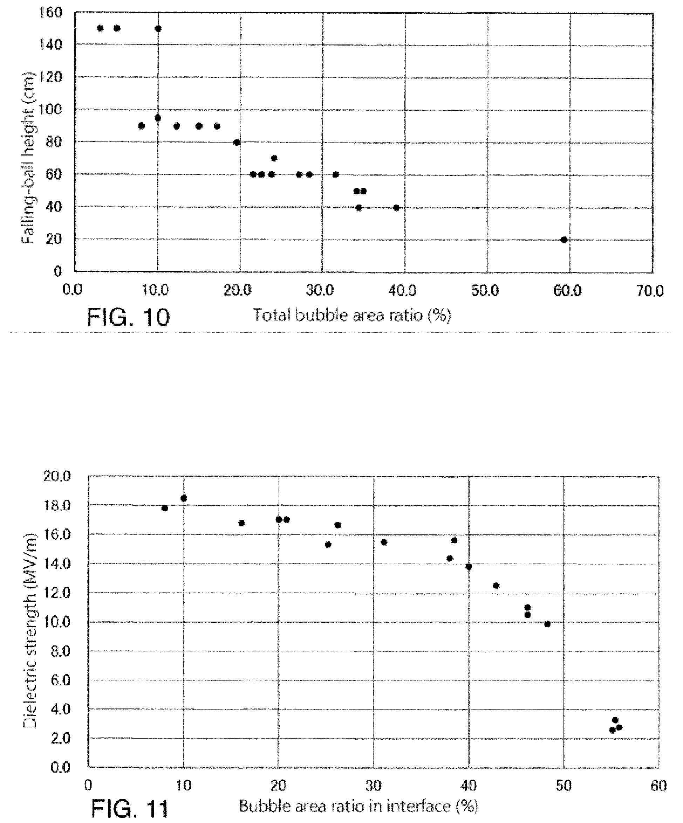

The evaluation of the falling-ball height was conducted by dropping a steel ball of 150 gram (g) in a free-falling manner from directly above the thermally-sprayed glass portion (the exposed surface of the glassy substance) of the metallic glass composite of each Prototype example. In this case, a height (vertical length from the thermally-sprayed glass portion to the steel ball) at which external abnormalities such as cleavages, cracks (springs), chips, for example, due to the impact of the dropped steel ball are visually confirmed in the thermally-sprayed glass portion, was set to the falling-ball height of each Prototype example. A plotting graph (dispersion diagram) of FIG. 10 illustrates a relationship between the total air-bubble area ratio (%) in the thermally-sprayed glass portion of the metallic glass composite and the falling-ball height (cm) in each Prototype example.

The dielectric strength voltage test was conducted using a test method described in JIS C 2110 (2016) (IEC 60243-1: 2013) to measure the metallic glass composite of each Prototype example. A plotting graph (dispersion diagram) of FIG. 11 illustrates a relationship between the area ratio (%) of the air bubbles in the interface of the thermally-sprayed glass portion of the metallic glass composite and the dielectric strength voltage (MV/m) in each Prototype example. In the dielectric strength voltage test, the model No.: HP-5110DS was used and the presence or absence of leakage when applying a voltage of 10 kV for 1 minute was evaluated.

In a case of the metallic glass composites of Prototype examples G1 to G19 listed in Table 3, the movement speed of the thermal spraying apparatus was set to 31 mm/sec. In the case of Prototype examples G1 to G18, the thermal spraying was performed on the metallic base five times. In the case of Prototype examples G19, the thermal spraying was performed on the metallic base once. In the case of the metallic glass composite of Prototype example G20, the movement speed of the thermal spraying apparatus was set to 52 mm/sec and the thermal spraying was performed on the metallic base once. In the case of the metallic glass composite of Prototype example G21, the movement speed of the thermal spraying apparatus was set to 125 mm/sec and the thermal spraying was performed on the metallic base once.

In the case of the metallic glass composites of Prototype examples H1 to H8 listed in Table 4, the movement speed of the thermal spraying apparatus was set to 31 mm/sec and the thermal spraying was performed on the metallic base five times.

In the case of the metallic glass composites of Prototype examples H9 to H16 listed in Table 5, the movement speed of the thermal spraying apparatus was set to 125 mm/sec and the thermal spraying was performed on the metallic base once. In the case of the metallic glass composites of Prototype examples H 17 to H21, the movement speed of the thermal spraying apparatus was set to 52 mm/sec and the thermal spraying was performed on the metallic base once. In the case of the metallic glass composites of Prototype example H22 to H24, the movement speed of the thermal spraying apparatus was set to 31 mm/sec and the thermal spraying was performed on the metallic base five times.

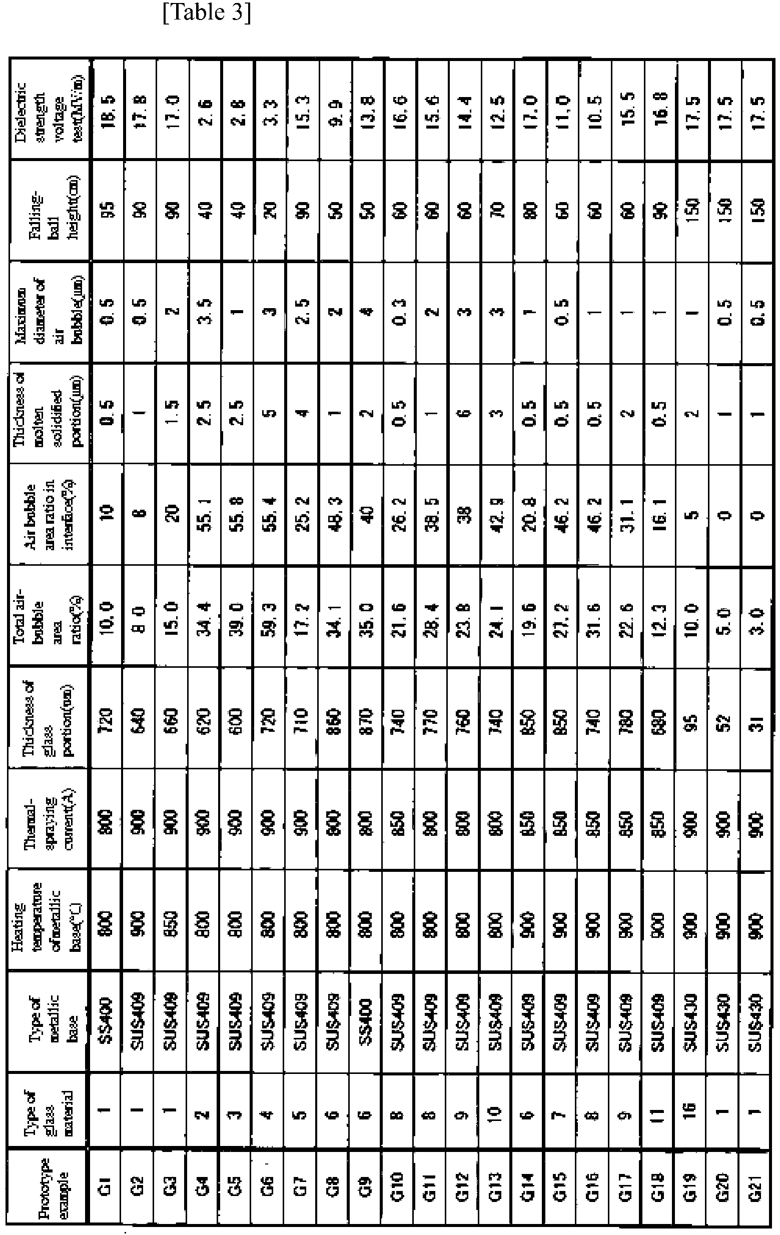

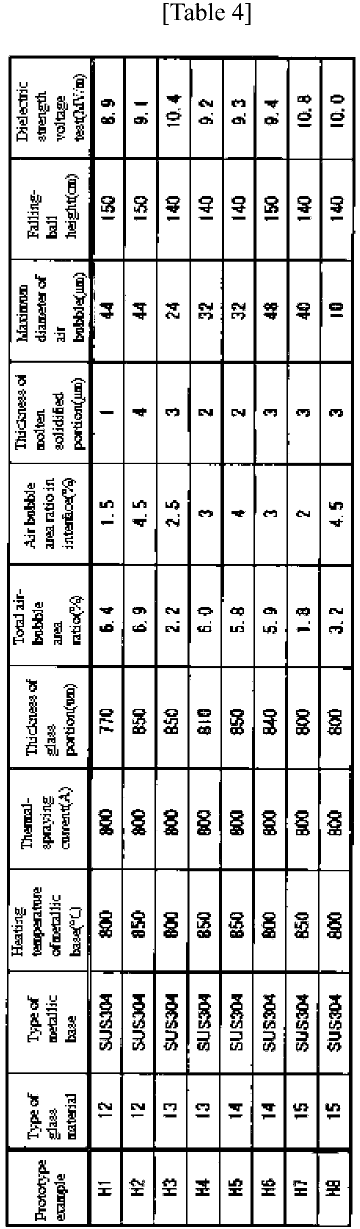

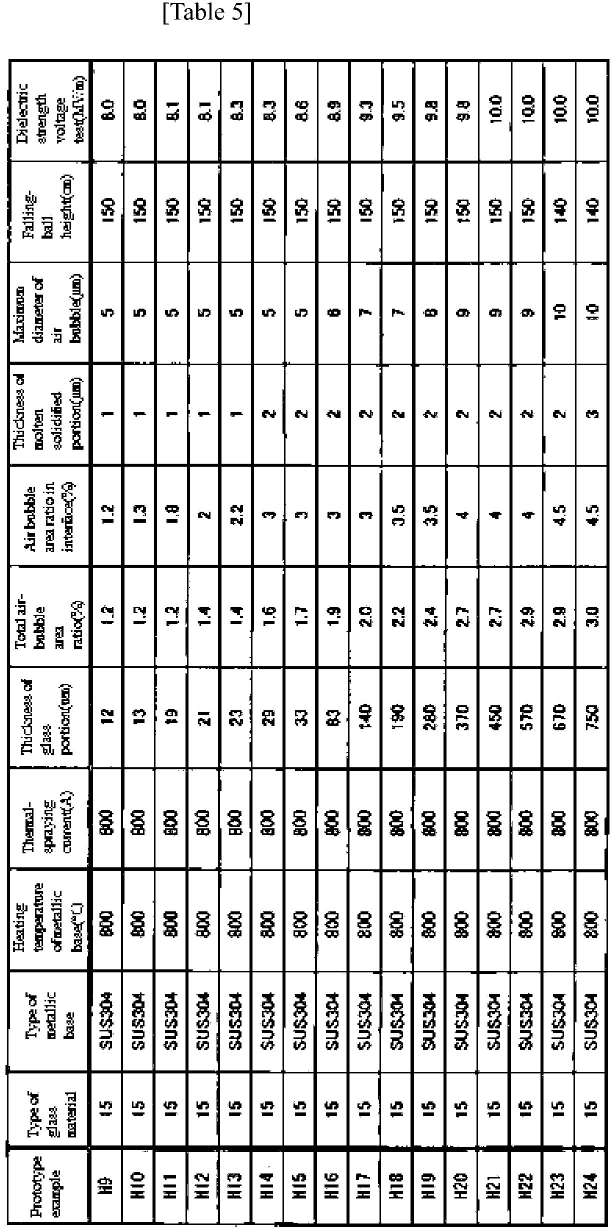

### Results and Considerations

As denoted in Table 3, the glass material of Prototype example 4 was used for the metallic glass composite of Prototype example G6. In Prototype example 4, the proportion of the second ingredient group B, which is a volatile ingredient, was high (32 mass% in total). For this reason, the areal ratio of the air bubbles was increased. The falling-ball height was reduced due to an increase in voids caused by the increase in the air bubbles. Meanwhile, the glass material of Prototype example 3 was used for the metallic glass composite of Prototype example G5. The proportion of the second ingredient group Bin the glass material was 29 mass% in total. As a result, it was clearly confirmed that the amount of air bubbles was reduced in the total air-bubble area ratio of Prototype example GS and the falling-ball height was also increased. Thus, in the metallic base made of the body-centered cubic ferrous material as SUS409, the upper limit of the proportion of the second ingredient group B was estimated to be 30 mass%.

The metallic glass composites of Prototype examples G19 to G21 are examples in which the thickness of the glassy film was set to a low level of 100 µm or less. In Prototype examples G19 to G21, the glass material of Prototype examples I and 16 in which the proportion of the second ingredient group B is low was used. Thus, it is considered that an amount of the second ingredient group B volatilized during the thermal spraying was reduced and the amount of air bubbles generated was also reduced. From the results of the falling-ball height, it was confirmed that the thermally-sprayed glass portion was extremely firmly formed.

In the fabrication of the metallic glass composite of each Prototype example, a thermal spraying environment applied to the plasma spraying apparatus is a temperature region in which the outermost surface of the metallic base serving as a base of the thermal spraying is melted. For this reason, the composition ingredient of the glass material is likely to volatilize due to heat generated during the thermal spraying. In particular, the linear expansion coefficient of the metallic base made of the body-centered cubic ferrous material is lower than the linear expansion coefficient of the metallic base made of the face-centered cubic ferrous material. Thus, it is important to control the thermal expansion coefficient (the linear expansion coefficient) and suppress the upper limit of the second ingredient group B which is likely to volatilize. Accordingly, from the results of Prototype examples, the maxing ratio of the second ingredient group B in the glass material may be in a range of 10 to 30 mass%, preferably in a range of 20 to 30 mass%.

The metallic glass composites of Prototype examples H1 to H24 are examples in which the metallic base (SUS304) made of the face-centered cubic ferrous material is used. The linear expansion coefficient of the face-centered cubic ferrous material is larger than that of the body-centered cubic ferrous material. Thus, the limitation on the mixing ratio of the second ingredient group B may be relaxed. Further, the total amount of air bubbles is small and the falling-ball height is good. Thus, the maxing ratio of the second ingredient group B in the glass material is in a range of 25 to 35 mass%.

In the fabrication of the glass material of Prototype example, when the mixing ratio of SiO₂ of the first ingredient group A in the glass material exceeds 70 mass%, the viscosity of the glass material melted during the thermal spraying is excessively increased so that residual air bubbles become remarkable. Further, when the mixing ratio of SiO₂ is less than 35 mass%, the adjustment of the linear expansion coefficient becomes difficult. Thus, in the case of the body-centered cubic ferrous material, the mixing ratio of SiO₂ of the first ingredient group A in the glass material is in a range of 35 to 70 mass%. Similarly, in the case of the face-centered cubic ferrous material, the mixing ratio of SiO₂ of the first ingredient group A in the glass material is in a range of 50 to 60 mass%.

The third ingredient group C serves to influence the viscosity of the glass material in a molten state. From the results of the glass materials and the metallic glass composites of Prototype examples, in the case of the body-centered cubic ferrous material, the mixing ratio of the third ingredient group C in the glass material is in a range of 10 to 30 mass%, and in the case of the face-centered cubic ferrous material, the mixing ratio of SiO₂ of the first ingredient group A in the glass material is a range of 10 to 20 mass%.

Considering the results of the falling-ball heights and the dielectric strength voltages of the metallic glass composites of Prototype examples G1 to G19 and the metallic glass composites of Prototype examples H1 to G24, the area ratio of the air bubbles having a diameter of 1 µm or more in the cross section of the thermally-sprayed glass portion in the thickness direction is less than 40%, preferably less than or equal to 30%. Further, the area ratio of the air bubbles having a diameter of 1 µm or more, which exist in the region of 30% or less of the thermally-sprayed glass portion in the thickness direction starting from the interface, is preferably less than or equal to 50%. Further, in an example in which the thickness of the thermally-sprayed glass portion of each of the metallic glass composites of Prototype examples G19 and G21 is less than or equal to 100 µm, the area ratio of the air bubbles having a diameter of 1 µm or more, which exist in the thermally-sprayed glass portion in the thickness direction, may be extremely reduced at a level of 10% or less. Thus, the falling-ball height and the dielectric strength voltage were improved.

The relationship between the total air-bubble area ratio (%) and the falling-ball height (cm) is illustrated in the plotting graph of FIG. 10. The value of the falling-ball height tends to decrease with an increase in the total air-bubble area ratio. This means that the strength of the thermally-sprayed glass portion is reduced as the air bubbles increase. The relationship between the air bubble area ratio (%) in the interface and the dielectric strength voltage (MV/m) is illustrated in the plotting graph of FIG. 11. The dielectric strength voltage is maintained until the air bubble area ratio in the interface becomes 40%. However, the dielectric strength voltage is remarkably reduced when the air bubble area ratio in the interface exceeds 40%. From such a tendency, a range of the air-bubble area ratio described above is specified.

### EXPLANATION OF REFERENCE NUMERALS

1A, 1B, 1C, 1D: Metallic glass composite
10, 11, 12, 13, 14: Metallic base
20: Thermally-sprayed glass portion
21: Air bubble
22: Residual glassy substance
30: Interface
40: Molten solidified portion
T30: Region of 30% of thermally-sprayed glass portion in thickness direction

## Claims

1. A metallic glass composite, comprising:
a metallic base made of a body-centered cubic ferrous material; and
a thermally-sprayed glass portion formed at a film thickness of 10 to 2,000 µm on the metallic base,
wherein a glass material forming the thermally-sprayed glass portion includes:
a first ingredient group A consisting of SiO₂ of 35 to 70 mass%;
a second ingredient group B consisting of B₂O₃ of 9 to 15 mass%, Li₂O of 5 to 9 mass% and Na₂O of 4 to 10 mass%, which is 18 to 30 mass% in total; and
a third ingredient group C consisting of BaO of 0 to 15 mass%, TiO₂ of 2 to 15 mass%, Al₂O₃ of 0 to 8 mass%, and ZnO of 0 to 15 mass%, which is 10 to 30 mass% in total,
wherein a proportion of a main ingredient D including the first ingredient group A, the second ingredient group B, and the third ingredient group C is 90 mass% or more,
wherein a value of a linear expansion coefficient of the glass material in a range of room temperature to 300 degrees C is 9 to 11 (×10⁻⁶/degrees C), and
wherein an area ratio of air bubbles having a diameter of 1 µm or more in a cross section of the thermally-sprayed glass portion in a thickness direction is less than 40%.

2. A metallic glass composite, comprising:
a metallic base made of a body-centered cubic ferrous material; and
a thermally-sprayed glass portion formed at a film thickness of 10 to 2,000 µm on the metallic base,
wherein a glass material forming the thermally-sprayed glass portion includes:
a first ingredient group A consisting of SiO₂ of 50 to 60 mass%;
a second ingredient group B consisting of B₂O₃ of 2 to 8 mass%, Li₂O of 8 to 15 mass% and Na₂O of 8 to 20 mass%, which is 25 to 35 mass% in total; and
a third ingredient group C consisting of BaO of 3 to 12 mass%, TiO₂ of 4 to 15 mass%, Al₂O₃ of 0 to 5 mass%, and ZnO of 0 to 5 mass%, which is 10 to 20 mass% in total,
wherein a proportion of a main ingredient D including the first ingredient group A, the second ingredient group B, and the third ingredient group C is 90 mass% or more,
wherein a value of a linear expansion coefficient of the glass material in a range of room temperature to 300 degrees C is 14 to 17 (×10⁻⁶/degrees C), and
wherein an area ratio of air bubbles having a diameter of 1 µm or more in a cross section of the thermally-sprayed glass portion in a thickness direction is less than 40%.

3. The metallic glass composite of Claim 1 or 2, wherein a difference between the linear expansion coefficient of the glass material and a linear expansion coefficient of the metallic base is 15% or less.

4. The metallic glass composite of Claim 1 or 2, further comprising: a molten solidified portion formed in an interface between the metallic base and the thermally-sprayed glass portion in the cross-section, the molten solidified portion being formed when the thermally-sprayed glass portion is embedded in the metallic base,
wherein the molten solidified portion has a thickness of 0.3 µm or more.

5. The metallic glass composite of Claim 1 or 2, wherein, in the thermally-sprayed glass portion, the area ratio of the air bubbles having the diameter of 1 µm or more, which exist in a region of 30% or less of the thermally-sprayed glass portion in the thickness direction starting from the interface between the metallic base and the thermally-sprayed glass portion in the cross-section is 50% or less.

6. The metallic glass composite of Claim 1 or 2, wherein the film thickness of the thermally-sprayed glass portion is in a range of 10 to 100 µm, and the area ratio of the air bubbles having the diameter of 1 µm or more in the cross section of the thermally-sprayed glass portion in the thickness direction is less than 10%.

7. The metallic glass composite of Claim 1 or 2, wherein the glass material includes an auxiliary ingredient E in addition to the main ingredient D, and
wherein the auxiliary ingredient E includes one or two or more ingredients selected from a group consisting of CaO, SrO, MgO, P₂O₅, K₂O, V₂O₅, Cr₂O₃, MnO₂, Fe₂O₃, Co₃O₄, NiO₂, CuO, Y₂O₃, ZrO₂, NB₂O₂, MoO₃, SnO₂, Sb₂O₃, WO₃, PbO, Bi₂O₃, La₂O₃, CeO₂, Pr₆O₁₁, Nd₂O₃, Sm₂O₃ and Gd₂O₃.
